# EUROPEAN PATENT SPECIFICATION

(11) **EP 1 926 334 B1**
(45) Date of publication and mention of the grant of the patent: **17.04.2013**
(21) Application number: 06761579.9
(22) Date of filing: 26.07.2006
(51) Int. Cl.: H04W 12/02, H04W 36/14, H04W 80/02

(54) **A INTER-SYSTEM HANDOVER METHOD**
VERFAHREN ZUM HANDOVER ZWISCHEN SYSTEMEN
MÉTHODE DE TRANSFERT INTER-SYSTÈME

(30) Priority: 19.08.2005 CN 200510090918
(43) Date of publication of application: 28.05.2008
(73) Proprietor: Huawei Technologies Co., Ltd., Longgang District, Shenzhen Guangdong 518129 (CN)
(72) Inventor: LI, Shijun, Shenzhen, Guangdong 518129 (CN); JIA, Yongli, Shenzhen, Guangdong 518129 (CN); LI, Jie, Shenzhen, Guangdong 518129 (CN); WANG, Hailei, Shenzhen, Guangdong 518129 (CN)
(74) Representative: Kreuz, Georg Maria
(86) International application number: PCT/CN2006/001850
(87) International publication number: WO 2007/019774

(56) References cited:
- EP-A2- 1 058 471
- WO-A1-03/043355
- WO-A2-03/009606
- "Digital cellular telecommunications system (Phase 2+); Mobile Switching Centre - Base Station system (MSC-BSS) Interface Layer 3 Specification (3GPP TS 48.008 version 6.10.0 Release 6); ETSI TS 148 008" ETSI STANDARDS, LIS, SOPHIA ANTIPOLIS CEDEX, FRANCE, vol. 3-G2, no. V6.10.0, 1 July 2005 (2005-07-01), XP014030813 ISSN: 0000-0001
- "Digital cellular telecommunications system (Phase 2+); Universal Mobile Telecommunications System (UMTS); Handover procedures (3GPP TS 23.009 version 6.1.0 Release 6); ETSI TS 123 009" ETSI STANDARDS, LIS, SOPHIA ANTIPOLIS CEDEX, FRANCE, vol. 3-CN1, no. V6.1.0, 1 June 2005 (2005-06-01), XP014030485 ISSN: 0000-0001

## Description

### Field of the Technology

The present invention relates to technologies of call handover in communication networks, and more particularly, to a method for a user terminal to perform a handover between a third Generation (3G) communication system and a second Generation (2G) communication system.

### Background of the Invention

In existing communication systems, 2G and 3G communication systems can coexist. Because of the mobility of a user terminal, it is possible for the user terminal to traverse two communication systems in the process of a call. For the purpose of ensuring that the conversation is not interrupted when the user terminal traverses different communication systems, it is necessary to perform a handover between 2G and 3G communication systems.

At the beginning of the handover, a serving Radio Network Subsystem (RNS-A) of the user terminal sends an Iu-Relocation-Required message to a serving Mobile Switching Center (MSC-A), indicating that the user terminal initiates a handover. The serving MSC-A sends a handover request message to a target Base Station Subsystem (BSS-B) to request to handover to the communication system of the target BSS-B. After reserving radio resources, the target BSS-B sends a HANDOVER REQUEST ACK message to the serving MSC-A. Thereafter, the serving MSC-A sends a Relocation Command message to the serving RNS-A, and the serving RNS-A sends a Handover Command message to the user terminal. The handover between systems is implemented via the interaction between network elements such as the user terminal, the serving RNS-A, the serving MSC-A and the serving BSS-B.

Generally, in both a serving communication system and a target communication system, the security of identity information and the security of conversation contents are protected for the user by encryption. According to the encryption description of a handover process described in the 3GPP protocol 44.018, the Handover Command message carries a Cipher Mode Setting Information Element (Cipher Mode Setting IE) for indicating an encryption algorithm used by a User Equipment (UE) when the UE hands over to the target cell. If the Cipher Mode Setting IE is not carried in the Handover Command message, it shows that the encryption algorithm used in the serving cell is still used after the handover procedure; if the Cipher Mode Setting IE is carried in the Handover Command message, it shows that the encryption algorithm indicated by the Cipher Mode Setting IE is used after the handover procedure. The Cipher Mode Setting IE may indicate the algorithm used in the serving cell or indicate that no encryption is needed.

Further, during a handover from the 3G communication system to the 2G communication system, if a 3G_MSC starts encryption, the Relocation Command message sent by the 3G_MSC needs to carry a Cipher Mode Setting IE for indicating the encryption algorithm used when the UE hands over to a GSM cell. If the Cipher Mode Setting IE is not carried, it shows that the original encryption algorithm is used. Because the encryption algorithms of the 3G communication system and those of the 2G network system are different, the Relocation Command message needs to carry the Cipher Mode Setting IE for indicating that the encryption algorithm of the 2G communication system is used after the handover.

In addition, when 2G_MSCs are not upgraded, the manners of sending the HANDOVER REQUEST ACK message by 2G Base Station Controllers (BSCs) produced by various vendors are different. For example, some 2G_BSCs, the Cipher Mode Setting IE is carried in a Handover Command of a Layer 3 message, and the Layer 3 message is packed in the HANDOVER REQUEST ACK message. For another 2G_BSCs, no Cipher Mode Setting IE is carried in the Handover Command. Instead, a Selected Encryption Algorithm is carried outside the Layer 3 of the HANDOVER REQUEST ACK message for indicating the 3G_MSC the encryption algorithm selected by the 2G_BSC. For yet another 2G_BSCs, there is no encryption information carried in the Handover Command or outside the Layer 3 of the HANDOVER REQUEST ACK message. In the third case, following problems occur.

The Relocation Command message is generated according to the Handover Command of the Layer 3 message packed in the HANDOVER REQUEST ACK message. Therefore, if the Handover Command does not carry the Cipher Mode Setting IE, the Relocation Command message sent to the UE does not carry the Cipher Mode Setting IE either. As a result, the UE can not acquire the encryption information of the target communication system after the handover, so that the handover fails.

Therefore, when a user terminal is to hand over between systems in accordance with the conventional method, the handover may fail because of the differences between encryption manners supported by the 3G communication system and those supported by the 2G communication system.

3GPP TS 48.008 v6.10.0 briefly describes the procedure of Handover, and particularly defines the Information Elements used in the procedure.

3GPP TS 23009 v6.1.0 describes the procedure of Handover. Section 6 describes the general description of the procedure for intra-MSC handovers. Section 7 describes the general description of the procedure for inter-MSC handovers. Section 8 describes the general description of the procedure for inter-3G_MSC handovers.

Europe patent application EP1058471A2 describes a method of processing a handover request from a BSC of a GSM-type network, the method comprising passing a handover request with GSM-type parameters from BSC through an MSC of a GSM-type network to a UMTS CN and to an RNC of the UMTS network; in the RNC, translating the GSM-type parameters to UTRAN parameters; and allocating UTRAN resources in response to the translated parameters.

### Summary of the Invention

The present invention provides a method for performing a handover between systems to ensure that a user terminal successfully performs a handover from a serving communication system to a target communication system.

A method for performing a handover between systems, comprising:
determining(101,301 or 303), by a serving Mobile Switching Center, MSC, a serving MSC Server or a serving Radio Network Controller, RNC, when a user terminal performs a handover from a serving communication system to a target communication system, that an encryption algorithm of the target communication system is not received
determining(101 or 305), by the serving MSC, the serving MSC Server or the serving RNC, that an encryption algorithm is selected by a target MSC or a target Base Station Controller, BSC according to a preconfigured table of encryption algorithm information;
acquiring(101), by the serving MSC, the serving MSC Server or the serving RNC, an encryption algorithm supported by the target MSC or the target BSC according to the preconfigured table of encryption algorithm information;
and sending(101,204, or 411), by the serving MSC, the serving MSC Server or the serving RNC, the acquired encryption algorithm to be used after the handover to a handover serving side; and
interacting(102), by the user terminal, with the target communication system and the serving communication system, and performing the handover; the terminal using the acquired encryption algorithm supported by the target communication system after the handover
wherein the serving communication system is a 3G communication system, and the target communication system is a 2G communication system.

By applying the present invention, it is ensure that a user terminal may successfully perform a handover from a serving communication system to a target communication system. Specifically, advantages of the present invention are as follow.

In the present invention, if a target MSC/BSC decides to encrypt, the device of a serving communication system or that of a target communication system determines an encryption algorithm supported by the target MSCBSC after the handover, and sends the determined encryption algorithm to a user terminal. Therefore, it is unnecessary for an operator to upgrade MSCs/BSCs of the existing 2G network, handover failure caused by differences between encryption algorithms of different systems is avoided, so that the success rate of the handovers between a 3G network system and a 2G network system improves, and the cost of implementation is low. Moreover, the device of the serving communication system or that of the target communication system may determine an optional IE supported by the target communication system according to a self-stored IE data table. Therefore, handover failure is avoids the reason of which are that the target communication systems are unable to support the optional IEs carried in the messages from the serving communication systems, and the success rate of the handovers further improves.

Because the methods in the embodiments of the present invention effectively ensure successful handovers between two networks, the conversations of users may not be interrupted because of the handover failure, so the satisfaction rate of the users effectively improves. Further, by applying the methods in the embodiments of the present invention, excellent resources of the existing 2G network are utilized adequately to provide the users with effective services at the beginning of establishing the 3G network, so the competitiveness of the 3G network improves.

### Brief Description of the Drawings

Embodiments of the present invention are as follows described in detail with reference to the accompanying drawings so as to make the above characters and merits of the present invention more apparent for those skilled in the art, the accompanying drawings include:
Figure 1 is a flowchart illustrating a method for performing a handover between systems in accordance with the present invention;
Figure 2 is a flowchart illustrating a method for performing a handover from a UMTS system to a GSM system in accordance with an embodiment of the present invention;
Figure 3 is a flowchart illustrating a method for a serving MSC-A to determine an encryption algorithm used after a handover in accordance with an embodiment of the present invention; and
Figure 4 is a flowchart illustrating a method for performing a handover from a UMTS system to a GSM system in accordance with another embodiment of the present invention.

### Detailed Description of the Invention

Embodiments of the present invention are now made to the following description taken in conjunction with the accompanying drawings.

The present invention provides a method for performing a handover between systems. In the method, a table of encryption algorithm information is preconfigured for storing the identity of a target MSC and an encryption algorithm selected by the target MSCBSC. When a user terminal performs a handover from a serving communication system to a target communication system, if encryption algorithm information is not received by a serving MSC, a target MSC or a serving Radio Network Controller (RNC), and if an encryption algorithm is selected by the target MSCBSC, the serving MSC/MSC Server or the serving RNC sends the encryption algorithm selected by the target MSCBSC to a handover serving side according to the table of the encryption algorithm information.

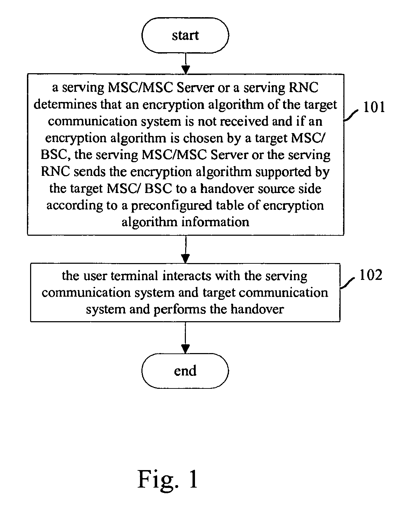

Figure 1 is a flowchart illustrating a method for performing a handover between systems in accordance with the present invention. With reference to Figure 1, the method is as follows.

At block 101, when a user terminal performs a handover from a serving communication system to a target communication system, if a serving MSC/MSC Server or a serving RNC determines that an encryption algorithm of the target communication system is not received and if an encryption algorithm is selected by a target MSC or BSC, the serving MSC/MSC Server or the serving RNC sends an encryption algorithm supported by the target MSC or BSC to a handover serving side according to a preconfigured table of encryption algorithm information.

At block 102, the user terminal interacts with the serving communication system and the target communication system, and performs the handover.

In the present invention, when the serving communication system is a 3G communication system, the target communication system may be a 2G communication system. Similarly, when the serving communication system is a 2G communication system, the target communication system may be a 3G communication system.

Two embodiments are given as follows to describe the method for performing the handover according to the present invention.

The embodiment I is described as follows.

In the embodiment, the serving communication system is a 3G communication system, the target communication system is a 2G communication system, and a table of encryption algorithm information is preconfigured in a device of the 3G communication system to ensure that a 3G user terminal successfully performs a handover between systems. The table of the encryption algorithm information includes identities of each MSC or BSC of the 2G communication system and flags. Each flag corresponds to the identities and indicates whether an encryption algorithm is selected. When the flag indicates that an encryption algorithm is selected, the table of the encryption algorithm information further includes the name of the selected encryption algorithm. In addition, a device in a UMTS system as the 3G communication system and a device in a GSM system as the 2G communication system belong to the same exchange in the embodiment.

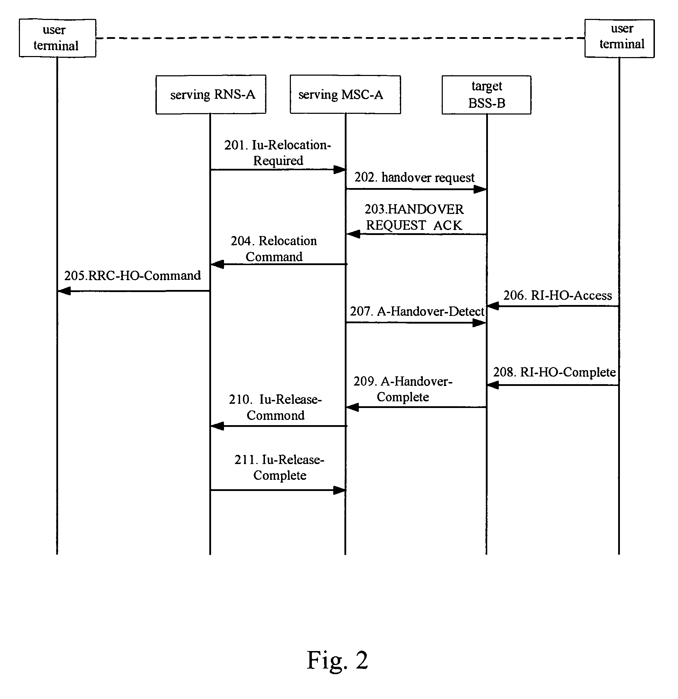

Figure 2 is a flowchart illustrating a method for performing a handover between systems, and in the method, an MSC determines the encryption algorithm used after the handover. With reference to Figure 2, the method is as follows.

Step 201: a user terminal performs a conversation in a 3G communication system. When the user terminal requests a handover, a RNS-A, via an Iu interface, sends an Iu-Relocation-Required message to a serving MSC-A in the 3G communication system to request the serving MSC-A to perform a handover, and the identity of a target cell is carried in the Iu-Relocation-Required message.

Step 202: after receiving the Iu-Relocation-Required message sent by the serving RNS-A, the serving MSC-A determines a target BSS-B according to the identity of the target cell, and sends to the target BSS-B a handover request message to notify the target BSS-B to reserve radio resources for the user terminal to be handed over.

Step 203: the target BSS-B reserves the radio resources and sends a HANDOVER REQUEST ACK message to the serving MSC-A.

Step 204: the serving MSC-A determines the encryption algorithm used after the handover, constructs a Relocation Command message, and sends the Relocation Command message to the serving RNS-A.

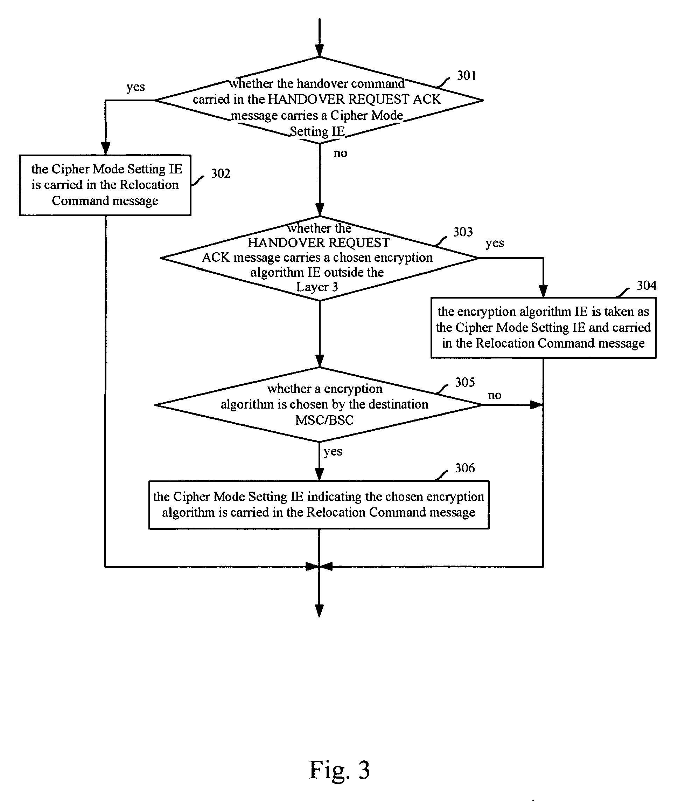

Figure 3 is a flowchart illustrating a method for the serving MSC-A to determine the encryption algorithm to be used after the handover and to construct the Relocation Command message. The method specifically includes the following processes.

At blocks 301 and 302, after receiving the HANDOVER REQUEST ACK message sent by the target BSS-B, the serving MSC-A determines whether the Handover Command carried in the HANDOVER REQUEST ACK message carries a Cipher Mode Setting IE. If the Handover Command carries a Cipher Mode Setting IE, the Cipher Mode Setting IE is carried in the Relocation Command message, and the procedure for determining the encryption algorithm used after the handover is terminated; if the Handover Command carries no Cipher Mode Setting IE, block 303 is performed.

According to definitions in protocols, the HANDOVER REQUEST ACK message sent to the serving MSC-A by the target BSS-B carries a Handover Command in the Layer 3, so that the serving MSC-A may parse to obtain the Handover Command and send the Handover Command to a handover serving side, for example, the handover serving side may be the serving RNS-A. If the Handover Command carries a Cipher Mode Setting IE, it shows that the encryption algorithm used after the handover is designated by the target communication system, and the Cipher Mode Setting IE is sent.

At blocks 303 and 304, the serving MSC-A determines whether the HANDOVER REQUEST ACK message carries an encryption algorithm IE outside the Layer 3; if the HANDOVER REQUEST ACK message carries an encryption algorithm IE outside the Layer 3, the encryption algorithm IE is then carried in the Relocation Command message as the Cipher Mode Setting IE. And the procedure for determining the encryption algorithm used after the handover is terminated; if the HANDOVER REQUEST ACK message carries no encryption algorithm IE outside the Layer 3, block 305 is performed.

When the HANDOVER REQUEST ACK message carries the selected encryption algorithm outside the Layer 3, the value of the Cipher Mode Setting IE is the value converted from the selected encryption algorithm. For example, if the encryption algorithm indicated by the selected encryption algorithm is A5-1, the value of the Cipher Mode Setting IE is also A5-1.

At blocks 305 and 306, the serving MSC-A determines whether an encryption algorithm is selected by the target MSC/BSC according to a table of encryption algorithm information; if an encryption algorithm is selected by the target MSC/BSC, the name of the encryption algorithm selected by the target MSC/BSC is acquired from the table of the encryption algorithm information and carried in the Relocation Command message as the Cipher Mode Setting IE; if no encryption algorithm is selected by the target MSCBSC, the procedure for determining the encryption algorithm used after the handover is terminated.

The serving MSC-A searches the table of the encryption algorithm information by taking the name of the target MSCBSC as an index, determines whether an encryption algorithm is selected by the target MSC/BSC according to the corresponding flag indicating whether an encryption algorithm is selected, and the serving MSC-A acquires the name of the selected encryption algorithm if an encryption algorithm is selected.

According to blocks 301 to 306, when the serving MSC-A does not receive the information indicating the encryption algorithm used after the handover, the serving MSC-A determines the encryption information of the target MSC/BSC according to the table of the encryption algorithm information. When the target MSCBSC selects an encryption algorithm, the serving MSC-A searches for the name of the encryption algorithm, and the name of the encryption algorithm is carried in the Relocation Command message sent to the handover serving side, so that the user terminal may use the encryption algorithm supported by the target communication system after the handover, and normal communication is performed. When the target MSC/BSC does not select an encryption algorithm, it shows that no encryption is needed, and no Cipher Mode Setting IE is to be carried in the Relocation Command message.

With reference to Figure 2 again, after determining the encryption algorithm used after the handover and sending the constructed Relocation Command message to the serving RNS-A, the method for performing the handover between the systems in the embodiment is performed as follows.

Step 205: the serving RNS-A, via an air interface, sends an RRC-HO-Command message carrying the information of the encryption algorithm selected by the target MSC/BSC to the user terminal to notify the user terminal to handover from the serving RNS-A to the target BSS-B.

Steps 206 to 209: the user terminal, via the air interface, sends an RI-HO-Access message to the target BSS-B to indicate that the user terminal attempts to access the target BSS-B. The target BSS-B sends an A-Handover-Detect message to the serving MSC-A to indicate that the access of the user terminal is detected. The user terminal, via the air interface, sends an RI-HO-Complete message to indicate that the user terminal successfully accesses the target BSS-B. The target BSS-B sends an A-Handover-Complete message to the serving MSC-A to notify that the user terminal requesting the handover performs the handover successfully.

Steps 210 and 211: the serving MSC-A sends to the RNS-A an Iu-Release-Command message to notify the RNS-A to release the radio resources occupied by the original conversation.

After releasing the radio resources, the RNS-A sends an Iu-Release-Complete message to the serving MSC-A.

Thus, the handover from the 3G UMTS to the 2G GSM is successfully performed.

In the above procedure, the serving MSC-A stores the table of the encryption algorithm information and determines the encryption algorithm used after the handover. Alternatively, the entity storing the table of the encryption algorithm information and determining the encryption algorithm may also be a serving MSC Server of the serving communication system, and the handover process between the systems is the same as steps 201 to 211 and blocks 301 to 306.

In addition, a serving RNC may also store the table of the encryption algorithm information and determine the encryption algorithm used after the handover. In this way, at step 204, after receiving the HANDOVER REQUEST ACK message, the serving MSC-A sends the Relocation Command message to the serving RNS-A; and at step 205, the serving RNC of the serving RNS-A determines the encryption algorithm used after the handover and constructs the Handover Command message. The serving RNS-A sends the Handover Command message to the user terminal via the air interface to request the user terminal to handover from the serving RNS-A to the target BSS-B. The operation performed at the above step 205 is similar as that at blocks 301 to 306, and the difference is that, the entity performing the blocks is the serving RNC, and the Handover Command message is constructed according to the Relocation Command message.

Further, according to the definitions in the protocols, the handover request message not only carries mandatory IEs including the type of information, the type of the channel, encryption information, level label information 1 or level label information 2, a cell identifier and the target cell identifier, but also may carry optional IEs such as priority. For the purpose of avoiding that the optional IEs can not be identified by the target communication system, an IE data table may be predefined in the embodiment for storing the IEs of the handover request message supported by the target BSC. In this way, at step 202, the serving MSC/MSC Server searches the IE data table by taking the identity of the target BSC as an index, and the serving MSC/MSC Server determines the IEs supported by the target BSC, selects IE(s) from the determined IEs, and sends a handover request message carrying the IE(s) to the target BSC. In another solution, the IE data table may be stored in the serving RNC. In this way, at step 201, the serving RNC searches the IE data table to determine the IEs supported by the target BSC, selects IE(s) from the determined IEs, and sends an Iu-Relocation-Required message carrying the selected IE(s) to the serving MSC/MSC Server, and the serving MSC/MSC Server sends a handover request message carrying the selected IE to the target BSC. Therefore, the handover failure is avoided which is caused by that the IEs carried in the handover request message can not be identified by the target communication system. Therefore the success rate of the handover increases.

The embodiment II is described as follows.

Similar to the embodiment I , a table of encryption algorithm information is predefined in the embodiment for storing the identities of target MSCs/BSCs in the 2G communication system as the target communication system, flags corresponding to the identities and indicating whether an encryption algorithm is selected, and the name of the selected encryption algorithm. Different from the embodiment I , the device in the UMTS system as the 3G communication system and the device in the GSM system as the 2G communication system belong to different exchanges in the embodiment.

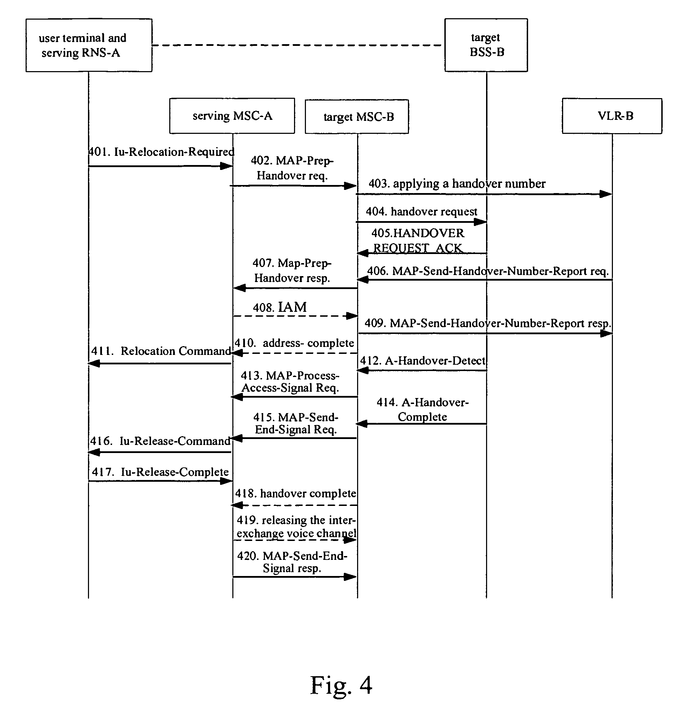

Figure 4 is a flowchart illustrating a method for performing a handover between systems. In the embodiment, a serving MSC-A determines the encryption algorithm used after the handover. With reference to Figure 4, the method is as follows.

Step 401: a user terminal performs a conversation in a 3G communication system. When the user requests a handover, an RNS-A, via an Iu interface, sends an Iu-Relocation-Required message to a serving MSC-A in the 3G communication system to request the serving MSC-A to perform a handover, and the identity of a target cell is carried in the relocation required message.

Step 402: the serving MSC-A determines a target BSS-B according to the identity of the target cell, and sends a prepare-handover request message to the target BSS-B, to notify the target BSS-B to reserve radio resources for the user terminal to be handed over.

Because it is an inter-exchange handover in the embodiment, the serving MSC-A first generates a 2G handover request message, and the serving MSC-A, on an E interface, packs the 2G handover request message to generate a MAP-Prep-Handover req. message, and sends the MAP-Prep-Handover req. message to the target MSC-B of the target BSC.

Similar to embodiment I , an IE data table may be predefined in embodiment □ for storing IEs of the handover request message supported by the target BSC. At this step, the serving MSC-A searches the IE data table by taking the identity of the target BSC as an index, determines the IEs supported by the target BSC, selects IE(s) from the determined IEs, and sends the MAP-Prep-Handover req. message carrying the IE(s) to the target MSC-B.

Steps 403 to 405: after receiving the MAP-Prep-Handover req. message, the target MSC-B requests a handover number from a Visit Location Register (VLR-B) to establish a voice channel between the serving MSC-A and the target MSC-B, i.e., preparing for Initial Address Message (IAM). The MSC-B sends a handover request message to the target BSS-B to request the target BSS-B to reserve radio resources for the user terminal requesting the handover. After reserving the radio resources, the target BSS-B sends a HANDOVER REQUEST ACK message to the serving MSC-A.

Steps 406 and 407: the VLR-B sends to the target MSC-B a MAP-Send-Handover-Number-Report req. message carrying the handover number allocated by the VLR-B. The MSC-B, according to the received handover number allocated by the VLR-B and the HANDOVER REQUEST ACK message, constructs and sends a Map-Prep-Handover resp. message to the serving MSC-A to indicate that the radio resources and the handover number are ready.

Steps 408 to 411: the serving MSC-A analyzes the handover number sent by the target MSC-B, establishes the voice channel between the serving MSC-A and the target MSC-B, and sends the IAM to the MSC-B. The MSC-B sends to the VLR-B a MAP-Send-Handover-Number-Report resp. message to release the allocated handover number, so that the handover number may be allocated to other users requesting a handover. The MSC-B sends an address-complete message to the serving MSC-A to indicate that the voice channel between the serving MSC-A and the target MSC-B is established. Further, the serving MSC-A determines the encryption algorithm used after the handover, constructs and sends a Relocation Command message to the serving RNS-A to request the user terminal to handover from the serving RNS-A to the target BSS-B.

The procedure of blocks 301 to 306 shown in Figure 3 may be used for determining the encryption algorithm used after the handover and constructing the Relocation Command message.

Steps 412 and 413: after the user terminal sends an RI-HO-Access message via the air interface, the target BSS-B sends an A-Handover-Detect message to the target MSC-B to notify the target MSC-B that the access of the user terminal is detected. The target MSC-B, via a MAP-Process-Access-Signal Req. message, sends the A-Handover-Detect message to the serving MSC-A to indicate that the user terminal prepares to access the 2G network.

Steps 414 to 417: after the user terminal accesses the 2G network, the target BSS-B sends an A-Handover-Complete message to the target MSC-B to notify the target MSC-B that the user terminal successfully accesses the 2G network. The MSC-B, via a MAP-Send-End-Signal Req. message sends the A-Handover-Complete message to the serving MSC-A to indicate that the user terminal successfully accesses the 2G network. Further, after receiving the MAP-Send-End-Signal Req. message, the serving MSC-A sends to the serving RNS-A an Iu-Release-Command message to notify the serving RNS-A to release the radio resources occupied by the original conversation. The serving RNS-A sends an Iu-Release-Complete message to notify the serving MSC-A that the radio resources occupied by the original conversation are released.

Steps 418 to 420: the MSC-B, via a relay interface, by using a message for example an ANSWER message, notifies the serving MSC-A that the handover is performed so as to keep the integrity of the relay signaling.

When the call ends, the serving MSC-A, via a RELEASE message, notifies the target MSC-B to release the inter-exchange voice channel. The serving MSC-A, via a MAP-Send-End-Signal resp. message notifies the target MSC-B to release the radio resources requested when the handover occurs.

Thus, the inter-exchange handover of the user terminal from the 3G UMTS system to the 2G GSM system is performed.

In this embodiment, the IE data table may also be predefined in the serving RNC. In this way, at step 401, the serving RNC searches the IE data table by taking the identity of the target BSC as an index, determines the IEs supported by the target BSC, selects IE(s) from the determined IEs, and sends an Iu-Relocation-Required message carrying the IE(s) to the serving MSC-A. The serving MSC-A sends the selected IE to the target MSC-B, and the target MSC-B sends a handover request message carrying the selected IE to the target BSS-B. In addition, the IE data table may also be predefined in the target MSC-B. In this way, at step 404, the target MSC-B searches the IE data table by taking the identity of the target BSC as an index, determines the IEs supported by the target BSC, selects IE(s) from the determined IEs, sends a handover request message carrying the selected IE(s) to the target BSS-B to request the target BSS-B to reserve radio resources for the user terminal requesting the handover.

The encryption algorithm used after the handover may be determined by the serving RNC in addition to the serving MSC-A. Specifically, when the table of the encryption algorithm information is predefined in the serving RNC, at the step 411, the serving MSC-A sends a Relocation Command message to the RNS-A to request the user terminal to handover from the serving RNS-A to the target BSS-B. The serving RNC of the RNS-A determines the encryption algorithm used after the handover and sends the determined encryption algorithm to the UE side. In this way, the serving RNC determines the encryption algorithm used after the handover according to the procedure similar to blocks 301 to 306 shown in Figure 3, and the difference is that, the encryption algorithm used after the handover is determined by the RNC according to the Relocation Command message.

According to the above embodiments, the device of the serving communication system or that of the target communication system determines the encryption algorithm supported by the target MSCBSC after the handover, and sends the determined encryption algorithm to the user terminal. Therefore, it is unnecessary for an operator to upgrade MSCs/BSCs of the existing 2G network, handover failure caused by differences between encryption algorithms of different systems is avoided, so that the success rate of the handovers between the 3G network system and the 2G network system increases, and the cost of implementation is low. Moreover, the device of the serving communication system or that of the target communication system may determine an optional IE supported by the target communication system according to a self-stored IE data table. Therefore, handover failure is avoided which are caused by that the target communication systems are unable to support the optional IEs carried in the messages from the serving communication systems, and the success rate of the handovers further increases.

Because the methods in the embodiments of the present invention effectively ensure successful handovers between two networks, the conversations of users may not be interrupted by the handover failure, so the satisfaction rate of the users effectively improves. Further, by applying the methods in the embodiments of the present invention, excellent resources of the existing 2G network are utilized adequately to provide the users with effective services at the beginning of establishing a 3G network, so the competitiveness of the 3G network improves.

## Claims

1. A method for performing a handover between systems, comprising:
determining(101,301 or 303), by a serving Mobile Switching Center, MSC, a serving MSC Server or a serving Radio Network Controller, RNC, when a user terminal performs a handover from a serving communication system to a target communication system, that an encryption algorithm of the target communication system is not received
determining(101 or 305), by the serving MSC, the serving MSC Server or the serving RNC, that an encryption algorithm is selected by a target MSC or a target Base Station Controller, BSC according to a preconfigured table of encryption algorithm information;
acquiring(101), by the serving MSC, the serving MSC Server or the serving RNC, an encryption algorithm supported by the target MSC or the target BSC according to the preconfigured table of encryption algorithm information;
and sending(101,204, or 411), by the serving MSC, the serving MSC Server or the serving RNC, the acquired encryption algorithm to be used after the handover to a handover serving side; and
interacting(102), by the user terminal, with the target communication system and the serving communication system, and performing the handover; the user terminal using the required encryption algorithm supported by the target communication system after the handover
wherein the serving communication system is a 3G communication system, and the target communication system is a 2G communication system.

2. The method of Claim 1, wherein the table of the encryption algorithm information comprises: the names of the target MSC or the target BSC, and flags each of which corresponds to an target MSC or an target BSC and indicates whether an encryption algorithm is selected; the determining(101 or 305) that the encryption algorithm is selected by the target MSC or the target BSC comprises:
searching the table of the encryption algorithm information by taking the name of target MSC or target BSC as an index; determining that the encryption algorithm is selected by the target MSC or the target BSC when a corresponding flag indicating whether an encryption algorithm is selected indicates that an encryption algorithm is selected.

3. The method of Claim 2, wherein when the flag indicating whether an encryption algorithm is selected indicates that an encryption algorithm is selected, the table of the encryption algorithm further comprises the name of the encryption algorithm selected by the target MSC or target BSC; the acquiring(101) the encryption algorithm supported by the target MSC or the target BSC comprises:
acquiring the name of the encryption algorithm from the table of the encryption algorithm according to the name of target MSC or target BSC.

4. The method of Claim 1, wherein the determining(101,301 or 303) that the encryption algorithm of the target communication system is not received comprises:
receiving, by a serving MSC or a serving MSC Server, a handover request ACK message from a target Base Station Subsystem (BSS); determining that the encryption algorithm of the target communication system is not received when a handover command carried in the handover request ACK message carries no Cipher Mode Setting Information Element and the handover request ACK message carries no encryption algorithm Information Element.

5. The method of Claim 4, wherein the sending(101,204, or 411) the acquired encryption algorithm to the handover serving side comprises:
sending, by the serving MSC or the serving MSC Server, a relocation command message carrying the acquired encryption algorithm to a serving Radio Network Subsystem (RNS).

6. The method of Claim 4, wherein after receiving, by the serving MSC or the serving MSC Server, the handover request ACK message from the target BSS, further comprising:
acquiring a Cipher Mode Setting Information Element when the handover command carried in the handover request ACK message carries the Cipher Mode Setting Information Element, sending a relocation command message carrying the Cipher Mode Setting Information Element to the serving RNS, and proceeding interacting (102), by the user terminal, with the target communication system and the serving communication system, and performing the handover.

7. The method of Claim 4, wherein after receiving, by the serving MSC or the serving MSC Server, the handover request ACK message from the target BSS, further comprising:
acquiring an encryption algorithm Information Element when the handover command carried in the handover request ACK message carries the encryption algorithm Information Element, sending a relocation command message carrying the encryption algorithm Information Element to the serving RNS, and proceeding interacting (102), by the user terminal, with the target communication system and the serving communication system, and performing the handover.

8. The method of Claim 1, wherein the determining(101,301 or 303) that the encryption algorithm of the target communication system is not received comprises:
receiving, by the serving RNC, a relocation command message from the serving MSC or the serving MSC Server; determining that the encryption algorithm of the target communication system is not received when the relocation command message carries no Cipher Mode Setting Information Element and no encryption algorithm Information Element.

9. The method of Claim 8, wherein the sending(101,204, or 411) the acquired encryption algorithm to the handover serving side comprises:
sending, by the serving RNC, a handover command message carrying the acquired encryption algorithm to the user terminal.

10. The method of Claim 8, wherein after receiving, by the serving RNC, the relocation command message from the serving MSC or the serving MSC Server, further comprising:
acquiring a Cipher Mode Setting Information Element when the relocation command message carries the Cipher Mode Setting Information Element, sending a handover command message carrying the acquired Cipher Mode Setting Information Element to the user terminal, and proceeding interacting (102), by the user terminal, with the target communication system and the serving communication system, and performing the handover.

11. The method of Claim 8, wherein after receiving, by the serving RNC, the relocation command message from the serving MSC or the serving MSC Server, further comprising:
acquiring an encryption algorithm Information Element when the relocation command message carries the encryption algorithm Information Element, sending a handover command carrying the acquired encryption algorithm Information Element to the user terminal, and proceeding interacting (102), by the user terminal, with the target communication system and the serving communication system, and performing the handover.

12. The method of Claim 1, wherein the determining(101,301 or 303) that the encryption algorithm of the target communication system is not received comprises:
receiving, by the serving MSC or the serving MSC Server, a response of a prepare-handover request message from a target MSC, determining that the encryption algorithm of the target communication system is not received when a handover command carried in the response of the prepare-handover request message carries no Cipher Mode Setting Information Element and the response of the prepare-handover request message carries no encryption algorithm Information Element.

13. The method of Claim 12, wherein the sending(101,204, or 411) the acquired encryption algorithm to the handover serving side comprises:
sending, by the serving MSC or the serving MSC Server, a relocation command message carrying the acquired encryption algorithm to a serving RNS.

14. The method of Claim 12, wherein after receiving, by the serving MSC or the serving MSC Server, the response of a prepare-handover request message from the target MSC, further comprising:
acquiring a Cipher Mode Setting Information Element if a handover command carries the Cipher Mode Setting Information Element when a handover command carried in the response of a prepare-handover request message carries the Cipher Mode Setting Information Element, sending a relocation command message carrying the acquired Cipher Mode Setting Information Element to a serving RNS, and proceeding interacting (102), by the user terminal, with the target communication system and the serving communication system, and performing the handover.

15. The method of Claim 12, wherein after receiving, by the serving MSC or the serving MSC Server, the response of a prepare-handover request message from the target MSC, further comprising:
acquiring an encryption algorithm Information Element when the response of a prepare-handover request message carries the encryption algorithm Information Element, sending a relocation command message carrying the acquired encryption algorithm Information Element to a serving RNS, and proceeding interacting (102), by the user terminal, with the target communication system and the serving communication system, and performing the handover.

16. The method of Claim 1, wherein an Information Element, IE, data table is preconfigured for storing Information Elements of a handover request message corresponding to each target BSC, and before determining(101,301 or 303) that the encryption algorithm of the target communication system is not received , further comprising:
determining Information Element(s) of a handover request message corresponding to the target BSC according to the IE data table, and sending a handover request message carrying the Information Element(s) to the target BSS.

17. The method of Claim 16, wherein the IE data table is configured in the serving MSC or the serving MSC Server, and the sending(101,204, or 411) the handover request message carrying the Information Element(s) to the target BSS comprises:
sending, by the serving MSC or the serving MSC Server, a handover request message carrying the Information Element(s) to the target BSS.

18. The method of Claim 16, wherein the IE data table is configured in the serving MSC or the serving MSC Server, and the sending(101,204, or 411) the handover request message carrying the Information Element(s) to the target BSS comprises:
generating, by the serving MSC or serving MSC Server, a handover request message carrying the Information Element(s), packing the handover request message into a prepare-handover request message, and sending the prepare-handover request message to the target MSC; parsing, by the target MSC, the prepare-handover request message to acquire the handover request message and sending the handover request message to the target BSS.

19. The method of Claim 16, wherein the IE data table is configured in the serving RNC, and the sending(101,204, or 411) the handover request message carrying the Information Element(s) to the target BSS comprises:
sending, by the serving RNC, a relocation request message carrying the Information Element(s) to the serving MSC or the serving MSC Server; parsing, by the serving MSC or serving MSC Server, the relocation request message to acquire the Information Element(s) corresponding to the target BSC, sending a handover request message carrying the Information Element(s) to the target BSS.

20. The method of Claim 16, wherein the IE data table is configured in the serving RNC, and the sending(101,204, or 411) the handover request message carrying the Information Element(s) to the target BSS comprises:
sending, by the serving RNC, a relocation request message carrying the Information Element(s) to the serving MSC or serving MSC Server; generating, by the serving MSC or serving MSC Server, a handover request message carrying the Information Element(s), packing the handover request message into a prepare-handover request message, and sending the prepare-handover request message to the target MSC; parsing, by the target MSC, the prepare-handover request message to acquire the handover request message, and sending the handover request message to the target BSS.

21. The method of Claim 16, wherein the IE data table is configured in the target MSC, and the sending(101,204, or 411) the handover request message carrying the Information Element(s) to the target BSS comprises:
Sending, by the target MSC, a handover request message carrying the Information Element(s) to the target BSS.

## Patentansprüche

1. Verfahren zum Ausführen einer Verbindungsübergabe zwischen Systemen, wobei das Verfahren Folgendes umfasst:
Bestimmen (101, 301 oder 303), dass ein Verschlüsselungsalgorithmus des Zielkommunikationssystems nicht empfangen wird, wenn ein Teilnehmergerät eine Verbindungsübergabe von einem verwendeten Kommunikationssystem zu einem Zielkommunikationssystem ausführt, durch eine verwendete Mobilfunkvermittlungsstelle, MSC, einen verwendeten MSC-Server oder einen verwendeten Funknetzcontroller, RNC;
Bestimmen (101 oder 305), dass ein Verschlüsselungsalgorithmus durch eine Ziel-MSC oder durch einen Zielbasisstationscontroller, BSC, ausgewählt ist, durch die verwendete MSC, durch den verwendeten MSC-Server oder durch den verwendeten RNC, in Übereinstimmung mit einer vorkonfigurierten Tabelle von Verschlüsselungsalgorithmusinformationen;
Erfassen (101) eines durch die Ziel-MSC oder durch den Ziel-BSC unterstützten Verschlüsselungsalgorithmus in Übereinstimmung mit der vorkonfigurierten Tabelle von Verschlüsselungsalgorithmusinformationen, durch die verwendete MSC, durch den verwendeten MSC-Server oder durch den verwendeten RNC;
und Senden (101, 204 oder 411) des erfassten Verschlüsselungsalgorithmus an eine die Verbindungsübergabe verwendende Seite durch die verwendete MSC, durch den verwendeten MSC-Server oder durch den verwendeten RNC, damit er nach der Verbindungsübergabe verwendet wird; und
Zusammenwirken (102) mit dem Zielkommunikationssystem und mit dem verwendeten Kommunikationssystem durch das Teilnehmergerät und Ausführen der Verbindungsübergabe;
wobei das Teilnehmergerät nach der Verbindungsübergabe den durch das Zielkommunikationssystem unterstützten geforderten Verschlüsselungsalgorithmus verwendet;
wobei das verwendete Kommunikationssystem ein 3G-Kommunikationssystem ist und das Zielkommunikationssystem ein 2G-Kommunikationssystem ist.

2. Verfahren nach Anspruch 1, wobei die Tabelle der Verschlüsselungsalgorithmusinformationen Folgendes umfasst: die Namen der Ziel-MSC oder des Ziel-BSC und die Merker, von denen jeder einer Ziel-MSC oder einem Ziel-BSC entspricht und angibt, ob ein Verschlüsselungsalgorithmus ausgewählt ist; wobei das Bestimmen (101 oder 305), dass der Verschlüsselungsalgorithmus durch den Ziel-MSC oder durch die Ziel-BSC ausgewählt ist, Folgendes umfasst:
Durchsuchen der Tabelle der Verschlüsselungsalgorithmusinformationen, indem der Name der Ziel-MSC oder des Ziel-BSC als ein Index genommen wird; Bestimmen,
dass der Verschlüsselungsalgorithmus durch die Ziel-MSC oder durch den Ziel-BSC ausgewählt ist, wenn ein entsprechender Merker, der angibt, ob ein Verschlüsselungsalgorithmus ausgewählt ist, angibt, dass ein Verschlüsselungsalgorithmus ausgewählt ist.

3. Verfahren nach Anspruch 2, wobei die Tabelle des Verschlüsselungsalgorithmus ferner den Namen des durch die Ziel-MSC oder durch den Ziel-BSC ausgewählten Verschlüsselungsalgorithmus umfasst, wenn der Merker, der angibt, ob ein Verschlüsselungsalgorithmus ausgewählt ist, angibt, dass ein Verschlüsselungsalgorithmus ausgewählt ist; wobei das Erfassen (101) des durch die Ziel-MSC oder durch den Ziel-BSC unterstützten Verschlüsselungsalgorithmus Folgendes umfasst:
Erfassen des Namens des Verschlüsselungsalgorithmus aus der Tabelle des Verschlüsselungsalgorithmus in Übereinstimmung mit dem Namen der Ziel-MSC oder des Ziel-BSC.

4. Verfahren nach Anspruch 1, wobei das Bestimmen (101, 301 oder 303), dass der Verschlüsselungsalgorithmus des Zielkommunikationssystems nicht empfangen wird, Folgendes umfasst:
Empfangen einer Verbindungsübergabeanforderungs-ACK-Nachricht von einem Zielbasisstationsteilsystem (Ziel-BSS) durch eine verwendete MSC oder durch einen verwendeten MSC-Server; Bestimmen, dass der Verschlüsselungsalgorithmus des Zielkommunikationssystems nicht empfangen wird, wenn ein in der Verbindungsübergabeanforderungs-ACK-Nachricht geführter Verbindungsübergabebefehl kein Schlüsselbetriebsarteinstellungs-Informationselement führt und die Verbindungsübergabeanforderungs-ACK-Nachricht kein Verschlüsselungsalgorithmus-Informationselement führt.

5. Verfahren nach Anspruch 4, wobei das Senden (101, 204 oder 411) des erfassten Verschlüsselungsalgorithmus an die die Verbindungsübergabe verwendende Seite Folgendes umfasst:
Senden einer Standortwechselbefehlsnachricht, die den erfassten Verschlüsselungsalgorithmus führt, an ein verwendetes Funknetzteilsystem (RNS) durch die verwendete MSC oder durch den verwendeten MSC-Server.

6. Verfahren nach Anspruch 4, wobei es nach dem Empfang der Verbindungsübergabeanforderungs-ACK-Nachricht von dem Ziel-BSS durch die verwendete MSC oder durch den verwendeten MSC-Server ferner Folgendes umfasst:
Erfassen eines Schlüsselbetriebsarteinstellungs-Informationselements, wenn der in der Verbindungsübergabeanforderungs-ACK-Nachricht geführte Verbindungsübergabebefehl das Schlüsselbetriebsarteinstellungs-Informationselement führt, Senden einer Standortwechselbefehlsnachricht, die das Schlüsselbetriebsarteinstellungs-Informationselement führt, an das verwendete RNS und weiteres Zusammenwirken (102) mit dem Zielkommunikationssystem und mit dem verwendeten Kommunikationssystem durch das Teilnehmergerät und Ausführen der Verbindungsübergabe.

7. Verfahren nach Anspruch 4, wobei es nach dem Empfang der Verbindungsübergabeanforderungs-ACK-Nachricht von dem Ziel-BSS durch die verwendete MSC oder durch den verwendeten MSC-Server ferner Folgendes umfasst:
Erfassen eines Verschlüsselungsalgorithmus-Informationselements, wenn der in der Verbindungsübergabeanforderungs-ACK-Nachricht geführte Verbindungsübergabebefehl das Verschlüsselungsalgorithmus-Informationselement führt, Senden einer Standortwechselbefehlsnachricht, die das Verschlüsselungsalgorithmus-Informationselement führt, an das verwendete RNS und weiteres Zusammenwirken (102) mit dem Zielkommunikationssystem und mit dem verwendeten Kommunikationssystem durch das Teilnehmergerät und Ausführen der Verbindungsübergabe.

8. Verfahren nach Anspruch 1, wobei das Bestimmen (101, 301 oder 303), dass der Verschlüsselungsalgorithmus des Zielkommunikationssystems nicht empfangen wird, Folgendes umfasst:
Empfangen einer Standortwechselbefehlsnachricht von der verwendeten MSC oder
von dem verwendeten MSC-Server durch den verwendeten RNC; Bestimmen, dass der Verschlüsselungsalgorithmus des Zielkommunikationssystems nicht empfangen wird, wenn die Standortwechselbefehlsnachricht kein Schlüsselbetriebsarteinstellungs-Informationselement und kein Verschlüsselungsalgorithmus-Informationselement führt.

9. Verfahren nach Anspruch 8, wobei das Senden (101, 204 oder 411) des erfassten Verschlüsselungsalgorithmus an die die Verbindungsübergabe verwendende Seite Folgendes umfasst:
Senden einer Verbindungsübergabebefehlsnachricht, die den erfassten Verschlüsselungsalgorithmus führt, an das Teilnehmergerät durch den verwendeten RNC.

10. Verfahren nach Anspruch 8, wobei es nach dem Empfang der Standortwechselbefehlsnachricht von der verwendeten MSC oder von dem verwendeten MSC-Server durch den verwendeten RNC ferner Folgendes umfasst:
Erfassen eines Schlüsselbetriebsarteinstellungs-Informationselements, wenn die Standortwechselbefehlsnachricht das Schlüsselbetriebsarteinstellungs-Informationselement führt, Senden einer Verbindungsübergabebefehlsnachricht, die das erfasste Schlüsselbetriebsarteinstellungs-Informationselement führt, an das Teilnehmergerät und weiteres Zusammenwirken (102) mit dem Zielkommunikationssystem und mit dem verwendeten Kommunikationssystem durch das Teilnehmergerät und Ausführen der Verbindungsübergabe.

11. Verfahren nach Anspruch 8, wobei es nach dem Empfang der Standortwechselbefehlsnachricht von der verwendeten MSC oder von dem verwendeten MSC-Server durch den verwendeten RNC ferner Folgendes umfasst:
Erfassen eines Verschlüsselungsalgorithmus-Informationselements, wenn die Standortwechselbefehlsnachricht das Verschlüsselungsalgorithmus-Informationselement führt, Senden eines Verbindungsübergabebefehls, der das erfasste Verschlüsselungsalgorithmus-Informationselement führt, an das Teilnehmergerät und weiteres Zusammenwirken (102) mit dem Zielkommunikationssystem und mit dem verwendeten Kommunikationssystem durch das Teilnehmergerät und Ausführen der Verbindungsübergabe.

12. Verfahren nach Anspruch 1, wobei das Bestimmen (101, 301 oder 303), dass der Verschlüsselungsalgorithmus des Zielkommunikationssystems nicht empfangen wird, Folgendes umfasst:
Empfangen einer Antwort einer Verbindungsübergabevorbereitungs-Anforderungsnachricht von einer Ziel-MSC durch die verwendete MSC oder durch den verwendeten MSC-Server, Bestimmen, dass der Verschlüsselungsalgorithmus des Zielkommunikationssystems nicht empfangen wird, wenn ein in der Antwort der Verbindungsübergabevorbereitungs-Anforderungsnachricht geführter Verbindungsübergabebefehl kein Schlüsselbetriebsarteinstellungs-Informationselement führt und die Antwort der Verbindungsübergabevorbereitungs-Anforderungsnachricht kein Verschlüsselungsalgorithmus-Informationselement führt.

13. Verfahren nach Anspruch 12, wobei das Senden (101, 204 oder 411) des erfassten Verschlüsselungsalgorithmus an die die Verbindungsübergabe verwendende Seite Folgendes umfasst:
Senden einer Standortwechselbefehlsnachricht, die den erfassten Verschlüsselungsalgorithmus führt, an ein verwendetes RNS durch die verwendete MSC oder durch den verwendeten MSC-Server.

14. Verfahren nach Anspruch 12, wobei es nach dem Empfang der Antwort einer Verbindungsübergabevorbereitungs-Anforderungsnachricht von der Ziel-MSC durch die verwendete MSC oder durch den verwendeten MSC-Server ferner Folgendes umfasst:
Erfassen eines Schlüsselbetriebsarteinstellungs-Informationselements, falls ein Verbindungsübergabebefehl das Schlüsselbetriebsarteinstellungs-Informationselement führt, wenn ein in der Antwort einer Verbindungsübergabevorbereitungs-Anforderungsnachricht geführter Verbindungsübergabebefehl das Schlüsselbetriebsarteinstellungs-Informationselement führt, Senden einer Standortwechselbefehlsnachricht, die das erfasste Schlüsselbetriebsarteinstellungs-Informationselement führt, an ein verwendetes RNS und weiteres Zusammenwirken (102) mit dem Zielkommunikationssystem und mit dem verwendeten Kommunikationssystem durch das Teilnehmergerät und Ausführen der Verbindungsübergabe.

15. Verfahren nach Anspruch 12, wobei es nach dem Empfang der Antwort einer Verbindungsübergabevorbereitungs-Anforderungsnachricht von der Ziel-MSC durch die verwendete MSC oder durch den verwendeten MSC-Server ferner Folgendes umfasst:
Erfassen eines Verschlüsselungsalgorithmus-Informationselements, wenn die Antwort einer Verbindungsübergabevorbereitungs-Anforderungsnachricht das Verschlüsselungsalgorithmus-Informationselement führt, Senden einer Standortwechselbefehlsnachricht, die das erfasste Verschlüsselungsalgorithmus-Informationselement führt, an ein verwendetes RNS und weiteres Zusammenwirken (102) mit dem Zielkommunikationssystem und mit dem verwendeten Kommunikationssystem durch das Teilnehmergerät und Ausführen der Verbindungsübergabe.

16. Verfahren nach Anspruch 1, wobei eine Informationselementdatentabelle, IE-Datentabelle, zum Speichern von Informationselementen einer Verbindungsübergabe-Anforderungsnachricht an jeden Ziel-BSC vorkonfiguriert wird und wobei es vor dem Bestimmen (101, 301 oder 303), dass der Verschlüsselungsalgorithmus des Zielkommunikationssystems nicht empfangen wird, ferner Folgendes umfasst:
Bestimmen eines Informationselements (von Informationselementen) einer Verbindungsübergabenachricht, die dem Ziel-BSC entspricht, in Übereinstimmung mit der IE-Datentabelle, und Senden einer Verbindungsübergabe-Anforderungsnachricht, die das Informationselement (die Informationselemente) führt, an das Ziel-BSS.

17. Verfahren nach Anspruch 16, wobei die IE-Datentabelle in der verwendeten MSC oder in dem verwendeten MSC-Server konfiguriert wird und das Senden (101, 204 oder 411) der Verbindungsübergabe-Anforderungsnachricht, die das Informationselement (die Informationselemente) führt, an das Ziel-BSS Folgendes umfasst:
Senden einer Verbindungsübergabe-Anforderungsnachricht, die das Informationselement (die Informationselemente) führt, an das Ziel-BSS durch die verwendete MSC oder durch den verwendeten MSC-Server.

18. Verfahren nach Anspruch 16, wobei die IE-Datentabelle in der verwendeten MSC oder in dem verwendeten MSC-Server konfiguriert wird und das Senden (101, 204 oder 411) der Verbindungsübergabe-Anforderungsnachricht, die das Informationselement (die Informationselemente) führt, an das Ziel-BSS Folgendes umfasst:
Erzeugen einer Verbindungsübergabe-Anforderungsnachricht, die das Informationselement (die Informationselemente) führt, durch die verwendete MSC oder durch den verwendeten MSC-Server, Packen der Verbindungsübergabe-Anforderungsnachricht in eine Verbindungsübergabevorbereitungs-Anforderungsnachricht und Senden der Verbindungsübergabevorbereitungs-Anforderungsnachricht an die Ziel-MSC; Parsen der Verbindungsübergabevorbereitungs-Anforderungsnachricht durch die Ziel-MSC, um die Verbindungsübergabe-Anforderungsnachricht zu erfassen, und Senden der Verbindungsübergabe-Anforderungsnachricht an das Ziel-BSS.

19. Verfahren nach Anspruch 16, wobei die IE-Datentabelle in dem verwendeten RNC konfiguriert wird und das Senden (101, 204 oder 411) der Verbindungsübergabe-Anforderungsnachricht, die das Informationselement (die Informationselemente) führt, an das Ziel-BSS Folgendes umfasst:
Senden einer Standortwechselanforderungsnachricht, die das Informationselement (die Informationselemente) führt, an die verwendete MSC oder an den verwendeten MSC-Server durch den verwendeten RNC; Parsen der Standortwechselanforderungsnachricht zum Erfassen des Informationselements (der Informationselemente), das dem Ziel-BSC entspricht (die dem Ziel-BSC entsprechen), durch die verwendete MSC oder durch den verwendeten MSC-Server, Senden einer Verbindungsübergabe-Anforderungsnachricht, die das Informationselement (die Informationselemente) führt, an das Ziel-BSS.

20. Verfahren nach Anspruch 16, wobei die IE-Datentabelle in dem verwendeten RNC konfiguriert wird und das Senden (101, 204 oder 411) der Verbindungsübergabe-Anforderungsnachricht, die das Informationselement (die Informationselemente) führt, an das Ziel-BSS Folgendes umfasst:
Senden einer Standortwechselanforderungsnachricht, die das Informationselement (die Informationselemente) führt, an die verwendete MSC oder an den verwendeten MSC-Server durch den verwendeten RNC; Erzeugen einer Verbindungsübergabe-Anforderungsnachricht, die das Informationselement (die Informationselemente) führt, durch die verwendete MSC oder durch den verwendeten MSC-Server, Packen der Verbindungsübergabe-Anforderungsnachricht in eine Verbindungsübergabevorbereitungs-Anforderungsnachricht und Senden der Verbindungsübergabevorbereitungs-Anforderungsnachricht an die Ziel-MSC; Parsen der Verbindungsübergabevorbereitungs-Anforderungsnachricht zum Erfassen der Verbindungsübergabe-Anforderungsnachricht durch die Ziel-MSC und Senden der Verbindungsübergabe-Anforderungsnachricht an das Ziel-BSS.

21. Verfahren nach Anspruch 16, wobei die IE-Datentabelle in der Ziel-MSC konfiguriert wird und das Senden (101, 204 oder 411) der Verbindungsübergabevorbereitungs-Anforderungsnachricht, die das Informationselement (die Informationselemente) führt, an das Ziel-BSS Folgendes umfasst:
Senden einer Verbindungsübergabe-Anforderungsnachricht, die das Informationselement (die Informationselemente) führt, an das Ziel-BSS durch die Ziel-MSC.

## Revendications

1. Procédé permettant d'exécuter un transfert entre des systèmes, comprenant les étapes suivantes :
déterminer (101, 301 ou 303), par un centre de commutation mobile, MSC, de desserte, un serveur MSC de desserte ou un contrôleur de réseau radio, RNC, de desserte lorsqu'un terminal utilisateur exécute un transfert depuis un système de communication de desserte jusqu'à un système de communication cible, qu'un algorithme de cryptage du système de communication cible n'a pas été reçu ;
déterminer (101 ou 305), par le MSC de desserte, le serveur MSC de desserte ou le RNC de desserte, qu'un algorithme de cryptage a été sélectionné par un MSC cible ou un contrôleur de station de base, BSC, cible selon une table préconfigurée d'informations d'algorithme de cryptage ;
acquérir (101), par le MSC de desserte, le serveur MSC de desserte ou le RNC de desserte, un algorithme de cryptage pris en charge par le MSC cible ou le BSC cible selon la table préconfigurée d'informations d'algorithme de cryptage ;
et envoyer (101, 204, ou 411), par le MSC de desserte, le serveur MSC de desserte ou le RNC de desserte, l'algorithme de cryptage acquis devant être utilisé après le transfert à un côté de desserte de transfert ; et
interagir (102), par le terminal utilisateur, avec le système de communication cible et
le système de communication de desserte, et exécuter le transfert, le terminal utilisateur utilisant l'algorithme de cryptage acquis pris en charge par le système de communication cible après le transfert ;
le système de communication de desserte étant un système de communication 3G et
le système de communication cible étant un système de communication 2G.

2. Procédé selon la revendication 1, dans lequel la table des informations d'algorithme de cryptage comprend : les noms du MSC cible ou du BSC cible, et des drapeaux correspondant chacun à un MSC cible ou à un BSC cible et indiquant chacun si un algorithme de cryptage est sélectionné ; l'étape consistant à déterminer (101 ou 305) que l'algorithme de cryptage a été sélectionné par le MSC cible ou le BSC cible comprend :
effectuer une recherche dans la table des informations d'algorithme de cryptage en prenant le nom du MSC cible ou du BSC cible comme index ; déterminer que l'algorithme de cryptage a été sélectionné par le MSC cible ou le BSC cible lorsqu'un drapeau correspondant indiquant si un algorithme de cryptage est sélectionné indique qu'un algorithme de cryptage a été sélectionné.

3. Procédé selon la revendication 2, dans lequel lorsque le drapeau indiquant si un algorithme de cryptage est sélectionné indique qu'un algorithme de cryptage a été sélectionné, la table de l'algorithme de cryptage comprend en outre le nom de l'algorithme de cryptage sélectionné par le MSC cible ou le BSC cible ; l'étape consistant à acquérir (101) l'algorithme de cryptage pris en charge par le MSC cible ou le BSC cible comprenant :
acquérir le nom de l'algorithme de cryptage à partir de la table de l'algorithme de cryptage selon le nom du MSC cible ou du BSC cible.

4. Procédé selon la revendication 1, dans lequel l'étape consistant à déterminer (101, 301 ou 303) que l'algorithme de cryptage du système de communication cible n'a pas été reçu comprend :
recevoir, par un MSC de desserte ou un serveur MSC de desserte, un message d'accusé de réception ACK de requête de transfert à partir d'un sous-système de station de base (BSS) cible ; déterminer que l'algorithme de cryptage du système de communication cible n'a pas été reçu lorsqu'une commande de transfert contenue dans le message ACK de requête de transfert ne comporte aucun élément d'informations d'activation du mode chiffrement et que le message ACK de requête de transfert ne comporte aucun élément d'informations d'algorithme de cryptage.

5. Procédé selon la revendication 4, dans lequel l'étape consistant à envoyer (101, 204, ou 411) l'algorithme de cryptage acquis au côté de desserte de transfert comprend :
envoyer, par le MSC de desserte ou le serveur MSC de desserte, un message de commande de relocation contenant l'algorithme de cryptage acquis à un sous-système de réseau radio (RNS) de desserte.

6. Procédé selon la revendication 4, comprenant en outre, après la réception par le MSC de desserte ou le serveur MSC de desserte, du message ACK de requête de transfert à partir du BSS cible, les étapes suivantes :
acquérir un élément d'informations d'activation du mode chiffrement lorsque la commande de transfert contenue dans le message ACK de requête de transfert comporte l'élément d'informations d'activation du mode chiffrement, envoyer un message de commande de relocation contenant l'élément d'informations d'activation du mode chiffrement au RNS de desserte, et continuer à interagir (102), par le terminal utilisateur, avec le système de communication cible et le système de communication de desserte, et exécuter le transfert.

7. Procédé selon la revendication 4, comprenant en outre, après la réception par le MSC de desserte ou le serveur MSC de desserte, du message ACK de requête de transfert à partir du BSS cible, les étapes suivantes :
acquérir un élément d'informations d'algorithme de cryptage lorsque la commande de transfert contenue dans le message ACK de requête de transfert comporte l'élément d'informations d'algorithme de cryptage, envoyer un message de commande de relocation contenant l'élément d'informations d'algorithme de cryptage au RNS de desserte, et continuer à interagir (102), par le terminal utilisateur,
avec le système de communication cible et le système de communication de desserte, et exécuter le transfert.

8. Procédé selon la revendication 1, dans lequel l'étape consistant à déterminer (101, 301 ou 303) que l'algorithme de cryptage du système de communication cible n'a pas été reçu comprend :
recevoir, par le RNC de desserte, un message de commande de relocation à partir du MSC de desserte ou du serveur MSC de desserte ; déterminer que l'algorithme de cryptage du système de communication cible n'a pas été reçu lorsque le message de commande de relocation ne contient aucun élément d'informations d'activation du mode chiffrement et aucun élément d'informations d'algorithme de cryptage.

9. Procédé selon la revendication 8, dans lequel l'étape consistant à envoyer (101, 204, ou 411) l'algorithme de cryptage acquis au côté de desserte de transfert comprend :
envoyer, par le RNC de desserte, un message de commande de transfert contenant l'algorithme de cryptage acquis au terminal utilisateur.

10. Procédé selon la revendication 8, comprenant en outre, après la réception par le RNC de desserte, du message de commande de relocation à partir du MSC de desserte ou du serveur MSC de desserte, les étapes suivantes :
acquérir un élément d'informations d'activation du mode chiffrement lorsque le message de commande de relocation contient l'élément d'informations d'activation du mode chiffrement, envoyer un message de commande de transfert contenant l'élément d'informations d'activation du mode chiffrement acquis au terminal utilisateur, et continuer à interagir (102), par le terminal utilisateur, avec le système de communication cible et le système de communication de desserte, et exécuter le transfert.

11. Procédé selon la revendication 8, comprenant en outre, après la réception par le RNC de desserte, du message de commande de relocation à partir du MSC de desserte ou du serveur MSC de desserte, les étapes suivantes :
acquérir un élément d'informations d'algorithme de cryptage lorsque le message de commande de relocation contient l'élément d'informations d'algorithme de cryptage,
envoyer une commande de transfert comportant l'élément d'informations d'algorithme de cryptage acquis au terminal utilisateur, et continuer à interagir (102),
par le terminal utilisateur, avec le système de communication cible et le système de communication de desserte, et exécuter le transfert.

12. Procédé selon la revendication 1, dans lequel l'étape consistant à déterminer (101, 301 ou 303) que l'algorithme de cryptage du système de communication cible n'a pas été reçu comprend :
recevoir, par le MSC de desserte ou le serveur MSC de desserte, une réponse à un message de requête de préparation de transfert obtenu à partir d'un MSC cible,
déterminer que l'algorithme de cryptage du système de communication cible n'a pas été reçu lorsqu'une commande de transfert contenue dans la réponse au message de requête de préparation de transfert ne comporte aucun élément d'informations d'activation du mode chiffrement et que la réponse au message de requête de préparation de transfert ne comporte aucun élément d'informations d'algorithme de cryptage.

13. Procédé selon la revendication 12, dans lequel l'étape consistant à envoyer (101, 204, ou 411) l'algorithme de cryptage acquis au côté de desserte de transfert comprend :
envoyer, par le MSC de desserte ou le serveur MSC de desserte, un message de commande de relocation contenant l'algorithme de cryptage acquis à un RNS de desserte.

14. Procédé selon la revendication 12, comprenant en outre, après la réception par le MSC de desserte ou le serveur MSC de desserte, de la réponse à un message de requête de préparation de transfert à partir du MSC cible, les étapes suivantes :
acquérir un élément d'informations d'activation du mode chiffrement si une commande de transfert contient l'élément d'informations d'activation du mode chiffrement lorsqu'une commande de transfert contenue dans la réponse à un message de requête de préparation de transfert comporte l'élément d'informations d'activation du mode chiffrement, envoyer un message de commande de relocation contenant l'élément d'informations d'activation du mode chiffrement acquis à un RNS de desserte, et continuer à interagir (102), par le terminal utilisateur, avec le système de communication cible et le système de communication de desserte, et exécuter le transfert.

15. Procédé selon la revendication 12, comprenant en outre, après la réception par le MSC de desserte ou le serveur MSC de desserte, de la réponse à un message de requête de préparation de transfert à partir du MSC cible, les étapes suivantes :
acquérir un élément d'informations d'algorithme de cryptage lorsque la réponse à un message de requête de préparation de transfert contient l'élément d'informations d'algorithme de cryptage, envoyer un message de commande de relocation contenant l'élément d'informations d'algorithme de cryptage acquis à un RNS de desserte, et
continuer à interagir (102), par le terminal utilisateur, avec le système de communication cible et le système de communication de desserte, et exécuter le transfert.

16. Procédé selon la revendication 1, dans lequel une table de données d'éléments d'informations, IE, est préconfigurée pour stocker des éléments d'informations d'un message de requête de transfert correspondant à chaque BSC cible et, avant l'étape consistant à déterminer (101, 301 ou 303) que l'algorithme de cryptage du système de communication cible n'a pas été reçu, comprenant en outre :
déterminer un(des) élément(s) d'informations d'un message de requête de transfert correspondant au BSC cible selon la table de données IE, et envoyer un message de requête de transfert contenant l'(les) élément(s) d'informations au BSS cible.

17. Procédé selon la revendication 16, dans lequel la table de données IE est configurée dans le MSC de desserte ou le serveur MSC de desserte, et l'étape consistant à envoyer (101, 204, ou 411) le message de requête de transfert contenant l'(les) élément(s) d'informations au BSS cible comprend :
envoyer, par le MSC de desserte ou le serveur MSC de desserte, un message de requête de transfert contenant l'(les) élément(s) d'informations au BSS cible.

18. Procédé selon la revendication 16, dans lequel la table de données IE est configurée dans le MSC de desserte ou le serveur MSC de desserte, et l'étape consistant à envoyer (101, 204, ou 411) le message de requête de transfert contenant l'(les) élément(s) d'informations au BSS cible comprend :
générer, par le MSC de desserte ou le serveur MSC de desserte, un message de requête de transfert contenant l'(les) élément(s) d'informations, empaqueter le message de requête de transfert en un message de requête de préparation de transfert,
et envoyer le message de requête de préparation de transfert au MSC cible ; analyser, par le MSC cible, le message de requête de préparation de transfert pour acquérir le message de requête de transfert et envoyer le message de requête de transfert au BSS cible.

19. Procédé selon la revendication 16, dans lequel la table de données IE est configurée dans le RNC de desserte, et l'étape consistant à envoyer (101, 204, ou 411) le message de requête de transfert contenant l'(les) élément(s) d'informations au BSS cible comprend :
envoyer, par le RNC de desserte, un message de requête de relocation contenant l'(les) élément(s) d'informations au MSC de desserte ou au serveur MSC de desserte ; analyser, par le MSC de desserte ou le serveur MSC de desserte, le message de requête de relocation pour acquérir l'(les) élément(s) d'informations correspondant au BSC cible, envoyer un message de requête de transfert contenant l'(les) élément(s) d'informations au BSS cible.

20. Procédé selon la revendication 16, dans lequel la table de données IE est configurée dans le RNC de desserte, et l'étape consistant à envoyer (101, 204, ou 411) le message de requête de transfert contenant l'(les) élément(s) d'informations au BSS cible comprend :
envoyer, par le RNC de desserte, un message de requête de relocation contenant l'(les) élément(s) d'informations au MSC de desserte ou au serveur MSC de desserte ; générer, par le MSC de desserte ou le serveur MSC de desserte, un message de requête de transfert contenant l'(les) élément(s) d'informations,
empaqueter le message de requête de transfert en un message de requête de préparation de transfert, et envoyer le message de requête de préparation de transfert au MSC cible ; analyser, par le MSC cible, le message de requête de préparation de transfert pour acquérir le message de requête de transfert, et envoyer le message de requête de transfert au BSS cible.

21. Procédé selon la revendication 16, dans lequel la table de données IE est configurée dans le MSC cible, et l'étape consistant à envoyer (101, 204, ou 411) le message de requête de transfert contenant l'(les) élément(s) d'informations au BSS cible comprend :
envoyer, par le MSC cible, un message de requête de transfert contenant l'(les) élément(s) d'informations au BSS cible.
